# EUROPEAN PATENT APPLICATION

(11) **EP 3 261 037 A1**
(43) Date of publication of application: **27.12.2017**
(21) Application number: 17177099.3
(22) Date of filing: 21.06.2017
(51) Int. Cl.: G06Q 20/22, G06Q 20/32, G06Q 20/34

(54) **METHOD AND APPARATUS FOR ACTIVATING VIRTUAL CARD**

(30) Priority: 22.06.2016 WO PCT/CN2016/086690
(71) Applicant: Beijing Xiaomi Mobile Software Co., Ltd., Beijing 100085 (CN)
(72) Inventor: ZHU, Yifan, BEIJING, 100085 (CN); CHEN, Yang, BEIJING, 100085 (CN); YANG, Wankun, BEIJING, 100085 (CN)
(74) Representative: Delumeau, François Guy

(57) **Abstract**

The present disclosure relates to a method and an apparatus for activating a virtual card, pertaining to the field of terminal technology. The method includes: displaying (101) an interface for selecting a virtual card to be activated upon receiving an instruction for displaying the interface, the interface for selecting a virtual card to be activated being configured to display at least two types of virtual cards; determining (102) a target virtual card, the target virtual card being a virtual card selected in the interface for selecting a virtual card to be activated; if the target virtual card requires authentication, acquiring (103) information to be authenticated, and if the authentication is passed, activating the target virtual card; and if the target virtual card does not require authentication, directly activating (104) the target virtual card.

## Description

### TECHNICAL FIELD

The present disclosure generally relates to the field of terminal technology, and more particularly, to a method and an apparatus for activating a virtual card.

### BACKGROUND

With the development of the terminal technology, a mobile terminal such as a mobile phone can have payment function by simulating a bank card or a bus card, which is referred to as mobile payment.

The bus card requires convenience, while the bank card requires convenience and safety. Therefore, there is a demand for a method for activating a virtual card which can meet the above requirements of both of the virtual cards.

### SUMMARY

In order to solve the problems existing in the related art, the present disclosure provides a method and an apparatus for activating a virtual card. The technical solutions are as follows.

In a first aspect, there is provided a method for activating a virtual card, which is applied in a terminal. The method includes the following steps:
displaying an interface for selecting a virtual card to be activated upon receiving an instruction for displaying the interface, the interface for selecting a virtual card to be activated being configured to display at least two types of virtual cards;
determining a target virtual card, the target virtual card being a virtual card selected in the interface for selecting a virtual card to be activated
if the target virtual card requires authentication, acquiring information to be authenticated, and if the authentication is passed, activating the target virtual card; and
if the target virtual card does not require authentication, directly activating the target virtual card.

In the embodiment of the present disclosure, when the terminal stores more than one type of virtual cards, a selection interface may be provided for the user to select a virtual card, and the specific payment manner may be determined accordingly. Therefore, the operation can be simplified to very few actions.

In one possible implementation, the method further includes:
upon detecting a designated device within a preset distance to the terminal, triggering the instruction for displaying the interface; or
upon detecting a designated action with respect to the terminal, triggering the instruction for displaying the interface.

In one possible implementation, after the step of determining the target virtual card, the method further includes:
determining whether the target virtual card requires authentication according to a card identification of the target virtual card; and
determining the target virtual card requires authentication if the card identification of the target virtual card belongs to a first type of identifications; and determining the target virtual card does not require authentication if the card identification of the target virtual card belongs to a second type of identifications.

In one possible implementation, if the target virtual card requires authentication, the step of acquiring information to be authenticated includes:
if the target virtual card requires authentication, acquiring fingerprint information of a user; and
comparing the acquired fingerprint information with previously stored fingerprint information, wherein if the acquired fingerprint information matches with the previously stored fingerprint information, the authentication is passed; and if the acquired fingerprint information does not match with the previously stored fingerprint information, the authentication is not passed.

In one possible implementation, if the authentication is passed, the step of activating the target virtual card includes:
if the authentication is passed, acquiring corresponding data of the target virtual card from a SE (Secure Entity) module of the terminal, and sending the data to a designated device through a NFC module of the terminal.

In one possible implementation, the at least two types of virtual cards includes a virtual bank card and a virtual bus card, the virtual bank card requires authentication, and the virtual bus card does not require authentication.

In a second aspect, there is provided an apparatus for activating a virtual card, which is applied in a terminal. The apparatus includes:
a displaying module configured to display an interface for selecting a virtual card to be activated upon receiving an instruction for displaying the interface, the interface for selecting a virtual card to be activated being configured to display at least two types of virtual cards;
a determining module configured to determine a target virtual card, the target virtual card being a virtual card selected in the interface for selecting a virtual card to be activated; and
an activating module configured to, if the target virtual card requires authentication, acquire information to be authenticated, and if the authentication is passed, activate the target virtual card; and if the target virtual card does not require authentication, directly activate the target virtual card.

In one possible implementation, the apparatus further includes:
a triggering module configured to, upon detecting a designated device within a preset distance to the terminal, trigger the instruction for displaying the interface; or upon detecting a designated action with respect to the terminal, trigger the instruction for displaying the interface.

In one possible implementation, the apparatus further includes:
a deciding module configured to determine whether the target virtual card requires authentication according to a card identification of the target virtual card; determine the target virtual card requires authentication if the card identification of the target virtual card belongs to a first type of identifications; and determine the target virtual card does not require authentication if the card identification of the target virtual card belongs to a second type of identifications.

In one possible implementation, the activating module is configured to, if the target virtual card requires authentication, acquire fingerprint information of a user; and compare the acquired fingerprint information with previously stored fingerprint information, wherein if the acquired fingerprint information matches with the previously stored fingerprint information, the authentication is passed; and if the acquired fingerprint information does not match with the previously stored fingerprint information, the authentication is not passed.

In one possible implementation, the activating module is configured to, if the authentication is passed, acquire corresponding data of the target virtual card from a SE module of the terminal, and send the data to a designated device through a NFC module of the terminal.

In one possible implementation, the at least two types of virtual cards includes a virtual bank card and a virtual bus card, the virtual bank card requires authentication, and the virtual bus card does not require authentication.

In a third aspect, there is provided an apparatus for activating a virtual card, which is applied in a terminal. The apparatus includes:
a processor; and
a memory for storing instructions executable by the processor;
wherein the processor is configured to perform:
   displaying an interface for selecting a virtual card to be activated upon receiving an instruction for displaying the interface, the interface for selecting a virtual card to be activated being configured to display at least two types of virtual cards;
   determining a target virtual card, the target virtual card being a virtual card selected in the interface for selecting a virtual card to be activated;
   if the target virtual card requires authentication, acquiring information to be authenticated, and if the authentication is passed, activating the target virtual card; and
   if the target virtual card does not require authentication, directly activating the target virtual card.

In a fourth aspect, there is provided a computer program which, when being executed on a processor of an apparatus for activating a virtual card in a terminal,, performs the method in the first aspect.

It is to be understood that both the foregoing general description and the following detailed description are exemplary only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for activating a virtual card according to an exemplary embodiment;
Fig. 2 is a flow chart illustrating a method for activating a virtual card according to an exemplary embodiment;
Fig. 3 is a schematic diagram illustrating a display interface of a virtual card according to an exemplary embodiment;
Fig. 4 is a block diagram illustrating an apparatus for activating a virtual card according to an exemplary embodiment; and
Fig. 5 is a block diagram illustrating an apparatus 500 for activating a virtual card according to an exemplary embodiment.

### DETAILED DESCRIPTION

In order to make the objects, the technical solutions and advantages more clear, the present disclosure will be described in further detail with reference to the embodiments and the accompanying drawings. Here, the illustrative embodiments of the present disclosure and the description thereof are not intended to limit the present disclosure, but to explain the present disclosure.

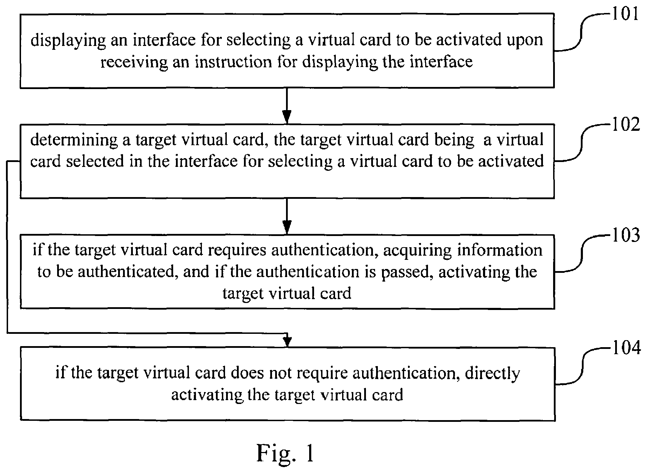

Fig. 1 is a flow chart illustrating a method for activating a virtual card according to an exemplary embodiment. As shown in Fig. 1, the method for activating a virtual card may be applied in a terminal, and includes the following steps.

At step 101, an interface for selecting a virtual card to be activated is displayed upon receiving an instruction for displaying the interface, the interface for selecting a virtual card to be activated being configured to display at least two types of virtual cards.

At step 102, a target virtual card is determined, the target virtual card being a virtual card selected in the interface for selecting a virtual card to be activated.

At step 103, if the target virtual card requires authentication, information to be authenticated is acquired, and if the authentication is passed, the target virtual card is activated.

At step 104, if the target virtual card does not require authentication, the target virtual card is directly activated.

In the embodiment of the present disclosure, when the terminal stores more than one type of virtual cards, a selection interface may be provided for the user to select a virtual card, and the specific payment manner may be determined accordingly. Therefore, the operation can be simplified to very few actions.

In one possible implementation, the method further includes:
upon detecting a designated device within a preset distance to the terminal, triggering the instruction for displaying the interface; or
upon detecting a designated action with respect to the terminal, triggering the instruction for displaying the interface.

In one possible implementation, after the step of determining the target virtual card, the method further includes:
determining whether the target virtual card requires authentication according to a card identification of the target virtual card; and
determining the target virtual card requires authentication if the card identification of the target virtual card belongs to a first type of identifications; and determining the target virtual card does not require authentication if the card identification of the target virtual card belongs to a second type of identifications.

In one possible implementation, if the target virtual card requires authentication, the step of acquiring information to be authenticated includes:
if the target virtual card requires authentication, acquiring fingerprint information of a user; and
comparing the acquired fingerprint information with previously stored fingerprint information, wherein if the acquired fingerprint information matches with the previously stored fingerprint information, the authentication is passed; and if the acquired fingerprint information does not match with the previously stored fingerprint information, the authentication is not passed.

In one possible implementation, if the authentication is passed, the step of activating the target virtual card includes:
if the authentication is passed, acquiring corresponding data of the target virtual card from a SE module of the terminal, and sending the data to a designated device through a NFC module of the terminal.

In one possible implementation, the at least two types of virtual cards includes a virtual bank card and a virtual bus card.

All of the above alternative technical solutions may be combined to form other alternative embodiments of the present disclosure in any manner, and the description thereof will be omitted herein.

Generally, when a mobile terminal simulates a bus card, the mobile terminal, with the screen of the mobile terminal locked, can be directly swiped against a turnstile of a bus or a subway to pay for the ride of the bus or the subway. However, if the mobile terminal also stores a virtual bank card therein, it may impose risk to the safety of the bank card, since there might be a mobile POS machine nearby to secretly swipe the virtual bank card to steal money from the bank card. On the other hand, if the function of the simulation bus card is disabled, the user will have to activate the function of the simulation of the bus card each time the user wants to swipe the simulated bus card. It can be a complex operation involving several steps of actions. Therefore, there is a demand for a method for activating a virtual card, which, in case where at least a virtual bank card and a virtual bus card are stored in the mobile terminal, can be a simple operation involving very few actions while ensuring safety.

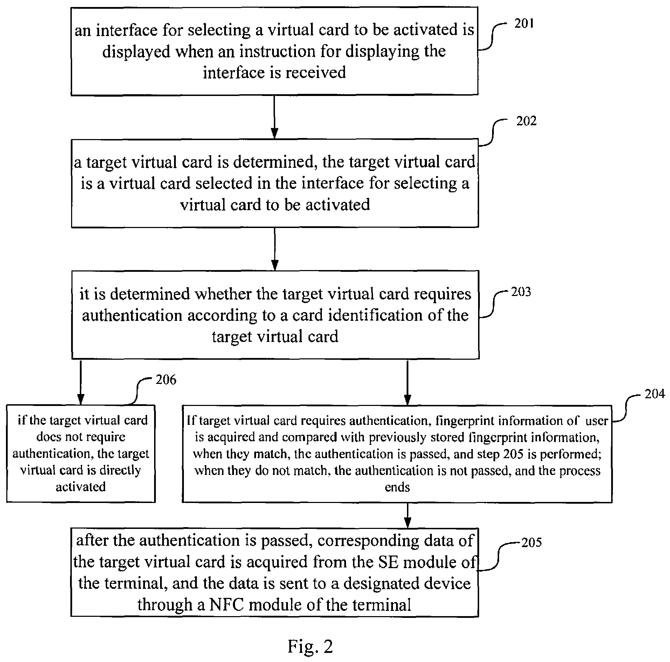

Fig. 2 is a flow chart illustrating a method for activating a virtual card according to an exemplary embodiment. As shown in Fig. 2, the method for activating a virtual card may be applied in a terminal, and includes the following steps.

At step 201, an interface for selecting a virtual card to be activated is displayed when an instruction for displaying the interface is received, the interface for selecting a virtual card to be activated being configured to display at least two types of virtual cards.

In the embodiment of the present disclosure, the instruction for displaying an interface may be triggered by any one of the following manners.

In a first manner, when a designated device is detected as being within a preset distance, the instruction for displaying an interface is triggered.

In the embodiment, the designated device refers to a device having a short-distance communication capability, such as a POS machine, a turnstile, an entrance guard machine. Such a designated device may have a short-distance communication module, such as a NFC module, a Blue Tooth module or the like. The above mentioned preset distance may vary depending on the type of the terminal or the type of the designated device, which will not be limited in the embodiment of the present disclosure.

The designated device may be detected as being within a preset distance to the terminal through any one of the following manners. First, the designated device may act as a master device to provide a radio frequency field during the entire communication process. When the terminal as a slave device enters the radio frequency field, the terminal can receive an instruction sent by the master device. After the master device is determined as belonging to a designated device according to the instruction, it may be determined that a designated device is detected as being within a preset distance to the terminal. The instruction may be a payment receiving instruction (such as in case of a POS machine or a bus card machine), a discovery instruction (such as in case of a POS machine), or an identity-information retrieving instruction (such as in case of an entrance guard machine), and so on.

In a second manner, when a designated action with respect to the terminal is detected, the instruction for displaying an interface is triggered.

The designated action may be a gesture, such as a triggering action on the screen of the terminal, or a triggering action on a designated component of the terminal, or the like. The triggering action can be of various forms, which will not be limited in the embodiment of the present disclosure. For example, the triggering action may be successive clicks, extended press, and so on. The designated action may also be a triggering action on a designated shortcut icon provided by the terminal, and the designated shortcut icon may invoke an interface for selecting a virtual card to be activated.

In the embodiment, the interface for selecting a virtual card to be activated may present at least two types of virtual cards, for example, a virtual bank card and a virtual bus card. Both the two types of virtual cards may be displayed with previously stored card faces. The virtual bank card is associated with a bank account corresponding to the virtual bank card, such that interaction may be conducted with a server for the virtual bank card to implement operations such as payment. Generally, for sake of payment safety, the virtual bank card stores identification information of the account owner, which requires a high level of privacy and safety. The virtual bus card may be associated with an amount of money charged in by the user. The virtual bus card may not involve personal information of the account owner, which requires a low level of privacy. The payment of the virtual bus card may be conducted without a server, and may be implemented just in response to a payment receiving instruction. For example, upon receipt of an instruction for receiving a payment of 2 Yuan, the stored amount of money of the virtual bus card may be directly deducted by 2 Yuan.

The above at least two types of virtual cards may be stored in a Secure Element (SE) of the terminal, to improve safety and avoid malicious access.

At step 202, a target virtual card is determined, the target virtual card is a virtual card selected in the interface for selecting a virtual card to be activated.

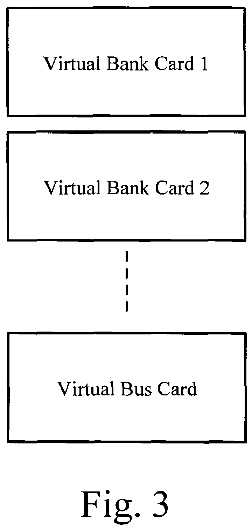

The interface for selecting a virtual card to be activated may be one as shown in Fig. 3. When it is detected that a trigger action is performed by the user with respect to any of the virtual cards in the interface for selecting a virtual card to be activated, it may be considered that the user has selected the virtual card to be activated, and the virtual card corresponding to the trigger action may be determined as the target virtual card.

In the embodiment, the trigger action may be a click, double clicks, an extended press and so on, which is not limited in the embodiment of the present disclosure.

At step 203, it is determined whether the target virtual card requires authentication according to a card identification of the target virtual card.

In the embodiment of the present disclosure, the determining process may include: when the card identification of the target virtual card belongs to a first type of identifications, it is determined that the target virtual card requires authentication; and when the card identification of the target virtual card belongs to a second type of identifications, it is determined that the target virtual card does not require authentication. It should be noted that, each virtual card has a corresponding card identification for uniquely identifying the virtual card. The first type of identifications may be used to identify virtual bank cards, and the second type of identifications may be used to identify virtual bus cards. However, the card identification may also belong to a third type of identifications or other identifications, which is not limited in the embodiment of the present disclosure.

It should be noted that, the logic of the determination may be stored in a Trusted Execution Environment (TEE). After the target virtual card is determined, the card identification of the target virtual card may be transmitted into the TEE, and the TEE will perform the determination according to the card identification. Since the TEE is a trusted operation system on the terminal which has safety processing capability and supports peripheral operation, it can improve the safety level of the determination by storing the logic of the determination in the TEE and performing the determination by the TEE.

At step 204, if the target virtual card requires authentication, fingerprint information of the user is acquired, the acquired fingerprint information is compared with previously stored fingerprint information, when the acquired fingerprint information matches with the previously stored fingerprint information, the authentication is passed, and step 205 is performed; when the acquired fingerprint information does not match with the previously stored fingerprint information, the authentication is not passed, and the process of the method ends.

When the card identification of the target virtual card belongs to the first type of identifications, it means that the target virtual card requires a high safety level, and fingerprint authentication may be provided for the target virtual card. For virtual cards of the first type of identifications, various virtual cards with different card identifications may correspond to different stored fingerprint information, to further improve safety level. However, the same fingerprint information may also be stored for virtual cards with different identifications. In this case, each of the virtual cards of the first type of identifications may be verified with the same finger, which can be convenient for the user.

It should be noted that, the fingerprint authentication may also be performed in the TEE, which will not be limited in the embodiment of the present disclosure. In practical application, the authentication may be password authentication or other forms of authentication based on biometric identification technique such as voice authentication, iris authentication, etc. For example, for voice authentication, the user may record a voice in advance, the terminal may extract voiceprint information of the user from the voice and store the extracted voiceprint information. In subsequent authentication, the similar voiceprint extraction may be performed, and the extracted voiceprint information may be compared with the stored voiceprint information. For the iris authentication, the iris information of the user may be acquired in advance, and the iris information may be stored and used in authentication similar to the above authentication, which will not be elaborated herein.

At step 205, after the authentication is passed, corresponding data of the target virtual card is acquired from the SE module of the terminal, and the data is sent to a designated device through a NFC module of the terminal.

At the above steps 204-205, authentication information to be authenticated is acquired, and after the authentication is passed, the target virtual card is activated. The step 205 is actually a card simulation process. For short distance communication, after the authentication is passed on the terminal, the card simulation function is activated to simulate the target virtual card. That is, the data of the virtual card is sent to a short-distance communication module, and then sent to the designated device through the short-distance communication module. In the embodiment, the data of the virtual card may include information such as a bank account corresponding to the virtual card for performing a payment operation.

At step 206, if the target virtual card does not require authentication, the target virtual card is directly activated.

When the card identification of the target virtual card belongs to the second type of identifications, it means the target virtual card requires a relatively low safety level. In this case, the card simulation function may be directly activated to simulate the target virtual card. That is, the data of the virtual card is sent to a short-distance communication module, and then sent to the designated device through the short-distance communication module.

However, alternatively to the above sending process, the designated device may read data from the NFC module of the terminal. This is not limited in the embodiment of the present disclosure.

In the embodiment of the present disclosure, before the designated device is detected, the card simulation function of the terminal is in a disabled state. Only when a designated device is detected in the vicinity of the terminal, the selection interface will be displayed, and it is determined how to activate a virtual card depending on the virtual card selected by the user. In this way, the operation can be simplified to very few actions while ensuring safety. In particular, in the embodiment, when the virtual cards include a virtual bank card and a virtual bus card, the user may select to activate the virtual bank card or the virtual bus card. When the user selects the virtual bank card, authentication is required to be passed before the card simulation function is activated to simulate the virtual bank card, that is, to activate the card. When the user selects the virtual bus card, the authentication is not required, and the card simulation function may be directly activated to simulate the virtual bus card. This can significantly improve the efficiency of the user operation.

In the embodiment of the present disclosure, when the terminal stores more than one type of virtual cards, a selection interface may be provided for the user to select a virtual card, and the specific payment manner may be determined accordingly. Therefore, the operation can be simplified to very few actions. In addition, corresponding process may be performed depending on specific safety requirements of payment, therefore, the operation can ensure safety while being simplified to very few actions.

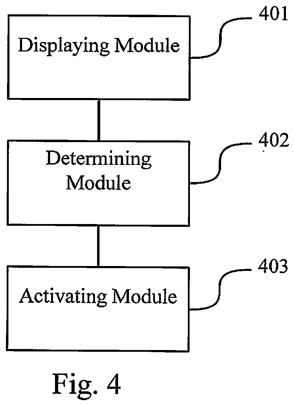

Fig. 4 is a block diagram illustrating an apparatus for activating a virtual card according to an exemplary embodiment. The apparatus may be applied in or operated in a terminal. As shown in Fig. 4, the apparatus includes:
a displaying module 401 configured to display an interface for selecting a virtual card to be activated upon receiving an instruction for displaying the interface, the interface for selecting a virtual card to be activated being configured to display at least two types of virtual cards;
a determining module 402 configured to determine a target virtual card, the target virtual card being a virtual card selected in the interface for selecting a virtual card to be activated; and
an activating module 403 configured to, if the target virtual card requires authentication, acquire information to be authenticated, and if the authentication is passed, activate the target virtual card; and if the target virtual card does not require authentication, directly activate the target virtual card.

In one possible implementation, the apparatus further includes:
a triggering module configured to, upon detecting a designated device within a preset distance to the terminal, trigger the instruction for displaying the interface; or upon detecting a designated action with respect to the terminal, trigger the instruction for displaying the interface.

In one possible implementation, the apparatus further includes:
a deciding module configured to determine whether the target virtual card requires authentication according to a card identification of the target virtual card; determine the target virtual card requires authentication if the card identification of the target virtual card belongs to a first type of identifications; and determine the target virtual card does not require authentication if the card identification of the target virtual card belongs to a second type of identifications.

In one possible implementation, the activating module is configured to, if the target virtual card requires authentication, acquire fingerprint information of a user; and compare the acquired fingerprint information with previously stored fingerprint information, wherein if the acquired fingerprint information matches with the previously stored fingerprint information, the authentication is passed; and if the acquired fingerprint information does not match with the previously stored fingerprint information, the authentication is not passed.

In one possible implementation, the activating module is configured to, if the authentication is passed, acquire corresponding data of the target virtual card from a SE module of the terminal, and send the data to a designated device through a NFC module of the terminal.

In one possible implementation, the at least two types of virtual cards includes a virtual bank card and a virtual bus card, the virtual bank card requires authentication, and the virtual bus card does not require authentication.

With respect to the apparatus in the above embodiment, the specific manners for performing operations for individual modules therein have been described in detail in the embodiments regarding the relevant method, which will not be elaborated herein.

It should be noted that, activating a virtual card performed on by the apparatus for activating a virtual card according to the above-described embodiment, is only illustrated by example of divided functional modules as the above-mentioned. While in practical application, the above functions may be assigned to different modules as desired, that is, the internal structure of the apparatus may be divided into different functional modules, so as to attain all or part of the functions described above. In addition, the method and the apparatus for activating a virtual card according to the above-described embodiments belong to the same conception, therefore, the detailed implementing processes of the apparatus may refer to those of the embodiments of the method, and the detailed description of which are not given herein any more.

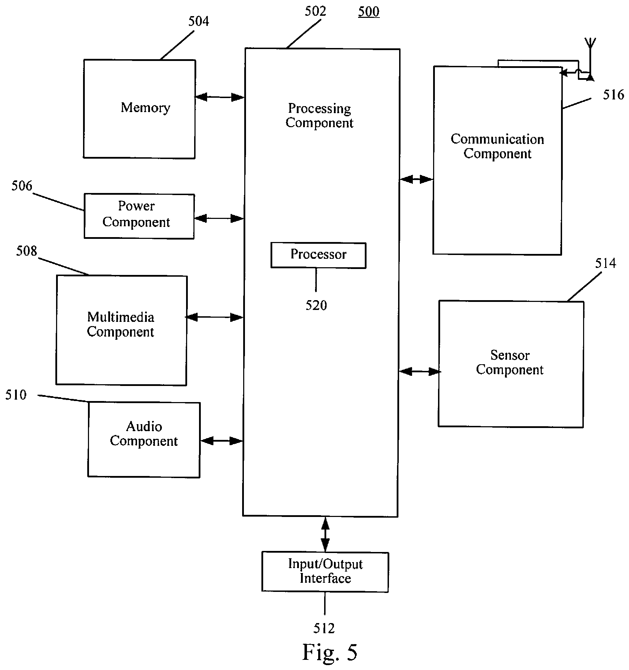

Fig. 5 is a block diagram illustrating an apparatus 500 for activating a virtual card according to an exemplary embodiment. For example, the apparatus 500 may be a mobile phone, a computer, a digital broadcast terminal, a messaging device, a gaming console, a tablet, a medical device, exercise equipment, a personal digital assistant, and the like.

Referring to Fig. 5, the apparatus 500 can include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the apparatus 500, such as the operations associated with display, telephone calls, data communications, camera operations, and recording operations. The processing component 502 can include one or more processors 520 to execute instructions to perform all or part of the steps in the above described methods. Moreover, the processing component 502 can include one or more modules which facilitate the interaction between the processing component 502 and other components. For instance, the processing component 502 can include a multimedia module to facilitate the interaction between the multimedia component 508 and the processing component 502.

The memory 504 is configured to store various types of data to support the operation of the apparatus 500. Examples of such data include instructions for any applications or methods operated on the apparatus 500, contact data, phonebook data, messages, pictures, video, etc. The memory 504 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 500. The power component 506 can include a power management system, one or more power sources, and any other components associated with the generation, management, and distribution of power in the apparatus 500.

The multimedia component 508 includes a screen providing an output interface between the apparatus 500 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 508 includes a front camera and/or a rear camera. The front camera and the rear camera can receive an external multimedia datum while the apparatus 500 is in an operation mode, such as a photographing mode or a video mode. Each of the front camera and the rear camera can be a fixed optical lens system or have focus and optical zoom capability.

The audio component 510 is configured to output and/or input audio signals. For example, the audio component 510 includes a microphone ("MIC") configured to receive an external audio signal when the apparatus 500 is in an operation mode, such as a call mode, a recording mode, and a voice recognition mode. The received audio signal can be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons can include, but are not limited to, a home button, a volume button, a starting button, and a locking button.

The sensor component 514 includes one or more sensors to provide status assessments of various aspects of the apparatus 500. For instance, the sensor component 514 can detect an open/closed status of the apparatus 500, relative positioning of components, e.g., the display and the keypad, of the apparatus 500, a change in position of the apparatus 500 or a component of the apparatus 500, a presence or absence of user contact with the apparatus 500, an orientation or an acceleration/deceleration of the apparatus 500, and a change in temperature of the apparatus 500. The sensor component 514 can include a proximity sensor configured to detect the presence of nearby objects without any physical contact. The sensor component 514 can also include a light sensor, such as a CMOS or CCD image sensor, for use in imaging applications. In some embodiments, the sensor component 514 can also include an accelerometer sensor, a gyroscope sensor, a magnetic sensor, a pressure sensor, or a temperature sensor.

The communication component 516 is configured to facilitate communication, wired or wirelessly, between the apparatus 500 and other devices. The apparatus 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 500 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 504, executable by the processor 520 in the apparatus 500, for performing the above-described methods. For example, the non-transitory computer-readable storage medium can be a ROM, a RAM, a CD-ROM, a magnetic tape, a floppy disc, an optical data storage device, and the like.

A non-transitory computer readable storage medium, when instructions in the storage medium are executed by the processor of the mobile terminal, the mobile terminal is activated to perform the method for activating a virtual card according to the embodiments as shown in Figs. 1 or 2.

## Claims

1. A method for activating a virtual card, which is applied in a terminal, **characterized in that** the method comprises the following steps:
displaying (101) an interface for selecting a virtual card to be activated upon receiving an instruction for displaying the interface, the interface for selecting a virtual card to be activated being configured to display at least two types of virtual cards;
determining (102) a target virtual card, the target virtual card being a virtual card selected in the interface for selecting a virtual card to be activated;
when the target virtual card requires authentication, acquiring (103) information to be authenticated, and when the authentication is passed, activating the target virtual card; and
when the target virtual card does not require authentication, directly activating (104) the target virtual card.

2. The method of claim 1, wherein the method further comprises:
upon detecting a designated device within a preset distance to the terminal, triggering the instruction for displaying the interface; or
upon detecting a designated action with respect to the terminal, triggering the instruction for displaying the interface.

3. The method of claim 1 or 2, wherein after the step of determining (102) the target virtual card, the method further comprises:
determining whether the target virtual card requires authentication according to a card identification of the target virtual card; and
determining the target virtual card requires authentication when the card identification of the target virtual card belongs to a first type of identifications; and
determining the target virtual card does not require authentication when the card identification of the target virtual card belongs to a second type of identifications.

4. The method of any one of claims 1 to 3, wherein when the target virtual card requires authentication, the step of acquiring (103) information to be authenticated comprises:
when the target virtual card requires authentication, acquiring fingerprint information of a user; and
comparing the acquired fingerprint information with previously stored fingerprint information, wherein when the acquired fingerprint information matches with the previously stored fingerprint information, the authentication is passed; and when the acquired fingerprint information does not match with the previously stored fingerprint information, the authentication is not passed.

5. The method of any one of claims 1 to 4, wherein when the authentication is passed, the step of activating the target virtual card comprises:
when the authentication is passed, acquiring corresponding data of the target virtual card from a SE module of the terminal, and sending the data to a designated device through a NFC module of the terminal.

6. The method of any one of claims 1 to 5, wherein the at least two types of virtual cards comprises a virtual bank card and a virtual bus card, the virtual bank card requires authentication, and the virtual bus card does not require authentication.

7. An apparatus for activating a virtual card, which is applied in a terminal, **characterized in that** the apparatus comprises:
a displaying module (401) configured to display an interface for selecting a virtual card to be activated upon receiving an instruction for displaying the interface, the interface for selecting a virtual card to be activated being configured to display at least two types of virtual cards;
a determining module (402) configured to determine a target virtual card, the target virtual card being a virtual card selected in the interface for selecting a virtual card to be activated; and
an activating module (403) configured to, when the target virtual card requires authentication, acquire information to be authenticated, and when the authentication is passed, activate the target virtual card; and when the target virtual card does not require authentication, directly activate the target virtual card.

8. The apparatus of claim 7, wherein the apparatus further comprises:
a triggering module configured to, upon detecting a designated device within a preset distance to the terminal, trigger the instruction for displaying the interface; or
upon detecting a designated action with respect to the terminal, trigger the instruction for displaying the interface.

9. The apparatus of claim 7 or 8, wherein the apparatus further comprises:
a deciding module configured to determine whether the target virtual card requires authentication according to a card identification of the target virtual card; determine the target virtual card requires authentication when the card identification of the target virtual card belongs to a first type of identifications; and determine the target virtual card does not require authentication when the card identification of the target virtual card belongs to a second type of identifications.

10. The apparatus of any one of claims 7 to 9, wherein the activating module (403) is configured to, when the target virtual card requires authentication, acquire fingerprint information of a user; and compare the acquired fingerprint information with previously stored fingerprint information, wherein when the acquired fingerprint information matches with the previously stored fingerprint information, the authentication is passed; and when the acquired fingerprint information does not match with the previously stored fingerprint information, the authentication is not passed.

11. The apparatus of any one of claims 7 to 10, wherein the activating module (403) is configured to, when the authentication is passed, acquire corresponding data of the target virtual card from a SE module of the terminal, and send the data to a designated device through a NFC module of the terminal.

12. The apparatus of any one of claims 7 to 11, wherein the at least two types of virtual cards comprises a virtual bank card and a virtual bus card, the virtual bank card requires authentication, and the virtual bus card does not require authentication.

13. An apparatus (500) for activating a virtual card, which is applied in a terminal, **characterized in that** the apparatus comprises:
a processor (520); and
a memory (504) for storing instructions executable by the processor (520);
wherein the processor (520) is configured to perform:
displaying an interface for selecting a virtual card to be activated upon receiving an instruction for displaying the interface, the interface for selecting a virtual card to be activated being configured to display at least two types of virtual cards;
determining a target virtual card, the target virtual card being a virtual card selected in the interface for selecting a virtual card to be activated;
when the target virtual card requires authentication, acquiring information to be authenticated, and when the authentication is passed, activating the target virtual card; and
when the target virtual card does not require authentication, directly activating the target virtual card.

14. A computer program which, when being executed on a processor (520) of an apparatus (500) for activating a virtual card in a terminal, performs the method of any of claims 1-6.
